(19)

Europäisches
Patentamt
European
Patent Office
Office européen
des brevets

(11) **EP 4 086 652 B1**

(12) **EUROPEAN PATENT SPECIFICATION**

(45) Date of publication and mention
of the grant of the patent:
**24.09.2025  Bulletin 2025/39**

(21) Application number: **20910333.2**

(22) Date of filing: **30.12.2020**

(51) International Patent Classification (IPC):
**G01S 5/02** *(2010.01)*          **G01S 13/76** *(2006.01)*
**G01S 13/87** *(2006.01)*

(52) Cooperative Patent Classification (CPC):
**G01S 13/765; G01S 13/878**

(86) International application number:
**PCT/KR2020/019427**

(87) International publication number:
**WO 2021/137628 (08.07.2021 Gazette 2021/27)**

(54) **MOBILE POSITIONING APPARATUS, AND LOCATION MEASUREMENT METHOD AND LOCATION MEASUREMENT PROGRAM IN WIRELESS NETWORK, IMPLEMENTED ON MOBILE PLATFORM**

MOBILE POSITIONIERVORRICHTUNG SOWIE VERFAHREN UND PROGRAMM ZUR ORTSMESSUNG IN EINEM DRAHTLOSEN NETZWERK, DIE AUF EINER MOBILEN PLATTFORM IMPLEMENTIERT SIND

APPAREIL DE POSITIONNEMENT MOBILE, ET PROCÉDÉ DE MESURE D'EMPLACEMENT ET PROGRAMME DE MESURE D'EMPLACEMENT DANS UN RÉSEAU SANS FIL, MIS EN OEUVRE SUR UNE PLATEFORME MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2019  KR 20190179959**

(43) Date of publication of application:
**09.11.2022  Bulletin 2022/45**

(73) Proprietor: **Daegu Gyeongbuk Institute Of Science and Technology**
**Daegu 42988 (KR)**

(72) Inventor: **LEE, Sang Cheol**
**Daegu 42764 (KR)**

(74) Representative: **AWA Sweden AB**
**Box 5117**
**200 71 Malmö (SE)**

(56) References cited:
**CN-A- 108 845 288        CN-A- 111 541 988**
**CN-A- 111 913 202        KR-A- 20060 111 167**
**KR-A- 20120 049 528      KR-A- 20180 063 263**
**KR-B1- 100 769 115        KR-B1- 101 544 315**
**KR-B1- 101 639 029        US-A1- 2006 071 780**
**US-A1- 2017 115 376       US-A1- 2019 317 184**

- **GUANGJIE HAN ET AL: "Localization algorithms of Wireless Sensor Networks: a survey", TELECOMMUNICATION SYSTEMS, BALTZER SCIENCE PUBLISHERS, BASEL, CH, vol. 52, no. 4, 1 April 2013 (2013-04-01), pages 2419 - 2436, XP002787411, ISSN: 1018-4864, DOI: 10.1007/ S11235-011-9564-7**

**Description**

[Technical Field]

The present invention relates to a mobile positioning device, and a location measurement method in a wireless network implemented on a mobile platform.

[Background Art]

Location estimation technology in a wireless network uses communication between nodes spatially separated from each other to indicate a location of each node in an absolute or relative coordinate system, and is technology that needs to be preceded above all else to create an environment where individuals can access a wireless network to obtain necessary information anytime and anywhere.

A first factor to be considered in the above-described location estimation technology is speed. The speed of the location estimation technology refers to an execution time consumed until a location value of a node having a location to be determined is given as a result value. Here, the execution time varies depending on the type of service, and may be treated as more important, especially in a network that needs to be operated in real time. A reason therefor is that importance of data generated before location estimation is performed by one node is ambiguous until the corresponding node finishes location estimation. The second is accuracy of location data. Location estimation technology, in which accuracy of location data is low, is less necessary. The third is a weight of the location estimation on the entire wireless network. The weight of the location estimation for the entire system means a degree to which the location estimation technology occupies system resources of one node when a service is performed at the one node, which means that the location estimation technology becomes an issue with regard to resource allocation of nodes in implementing the service.

Trilateration is a conventional location estimation technology of a wireless network. Trilateration is the most representative in a distance-based location estimation method, and is simple in location estimation since it is sufficient to solve linear equations as many as the number of reference nodes to be considered. That is, in trilateration, a calculation speed is fast, and the weight of the wireless network is low. However, trilateration has a limitation in that an error in distance measurement is reflected as an error in actual location estimation since distance information from reference nodes is one-dimensional (1D), whereas a region for location estimation is two-dimensional (2D) or three-dimensional (3D).

To solve this problem, technology (Republic of Korea Patent Publication No. 10-2012-0049528) capable of estimating an accurate 3D location with a small amount of computation in a wireless network has been developed, and this technology is a 3D positioning method including four fixed nodes.

However, the newly developed wireless positioning method (Republic of Korea Patent Publication No. 10-2012-0049528) has a limitation in being implemented only in a specific region since a location of a node can be estimated only in the case of a fixed space.

US2017/0115376 discloses a technique capable of effectively estimating a three-dimensional location of a target node through a geometric access by using location information of three anchor nodes. The height of a tetrahedron is calculated. Projected estimated distances, obtained by projecting the estimated distances on a plane H formed by the three anchor nodes, and coordinate values of the three anchor nodes converted on a second coordinate system of the plane H are obtained, and then trilateration is performed using the projected estimated distances and the converted coordinate values so as to calculate an estimated location, projected on the plane H, of the target node. A coordinate value of the calculated estimated location is converted into a coordinate value on a first coordinate system and then the height of the tetrahedron is reflected thereto so as to obtain a coordinate value of the three-dimensional estimated location of the target node.

[Disclosure]

[Technical Problem]

Therefore, the present invention has been made to solve limitations of a wireless positioning method in a fixed space implemented only in a specific region, and proposes a location measurement method in a wireless network implemented on a mobile platform and a mobile positioning device for executing the method.

Technical problems of the present invention are not limited to the technical problems mentioned above, and other technical problems not mentioned will be clearly understood by those skilled in the art from the following description.

[Technical Solution]

<The invention is defined by the claims.>

[Advantageous effects]

Even though a conventional location estimation method in a wireless network is limited to a fixed space, a mobile positioning device and a location measurement method in a wireless network implemented on a mobile platform according to an embodiment of the present invention are applicable to a mobile space.

A mobile positioning device and a location measurement method in a wireless network implemented on a mobile platform according to an embodiment of the present invention propose a new positioning formula, so that positioning calculation is simplified, a load for location computation may be reduced, and real-time calculation may be performed.

In addition, when a linear location calculation formula using a volume is used in the location measurement method according to an embodiment of the present invention, the network may be expanded.

A location measurement method according to an embodiment of the present invention may be implemented on a mobile platform, and thus may be applied to various practical applications such as a follower robot and a 3D large component.

A location measurement method according to an embodiment of the present invention may measure a location of a moving 3D object such as a drone in real time.

A location calculation formula used in a location measurement method according to an embodiment of the present invention is linear, and thus has an advantage of being suitable for implementing an algorithm such as a linear Kalman filter for improving location accuracy.

A location measurement program according to an embodiment of the present invention may be implemented with a low-cost embedded board, thereby reducing manufacturing cost.

Effects of the present invention are not limited to the effects mentioned above, and other effects not mentioned will be clearly understood by those skilled in the art from the following description.

[Description of Drawings]

FIG. 1 illustrates a mobile positioning device according to an embodiment of the present invention;

FIG. 2 is a flowchart of a location measurement method in a wireless network implemented on a mobile platform according to an embodiment of the present invention;

FIG. 3 illustrates a method of computing a location of a target node using a distance according to an embodiment of the present invention;

FIG. 4 is a flowchart of a location measurement method in a wireless network implemented on a mobile platform according to another embodiment of the present invention; and

FIGs. 5 to 7 illustrate a method of computing a location of a target node using volume information according to another embodiment of the present invention.

[Best Mode]

Since the present invention may have various changes and may have various embodiments, specific embodiments are described in detail with reference to the drawings. In describing each figure, like reference numerals have been used for like elements.

Although "first", "second", "A", "B" etc. are used to describe various elements, these elements are not limited by these terms. These terms are merely used to distinguish one element from another. For example, without departing from the scope of the present invention, a first element may be referred to as a second element, and similarly, the second element may be referred to as the first element. The term "and/or" includes a combination of a plurality of related listed items or any one of the plurality of related listed items.

When an element is referred to as being "coupled" or "connected" to another element, the element may be directly coupled or connected to the other element. However, it should be understood that another element may be present therebetween. In contrast, when an element is referred to as being "directly coupled" or "directly connected" to another element, it should be understood that there are no other elements in the middle.

In the present specification, it should be understood that a term such as "include" or "have" is intended to designate that the features, numbers, steps, operations, elements, parts, or combinations thereof described in the specification are present, and does not preclude the possibility of addition or presence of one or more other features, numbers, steps, operations, elements, parts, or combinations thereof.

In addition, it should be understood that "first" and "second" are used herein for distinguishing purposes only, and are not meant to indicate or anticipate sequence or priority in any way.

Unless defined otherwise, all terms used herein, including technical or scientific terms, have the same meaning as commonly understood by one of ordinary skill in the art to which this invention belongs. Terms such as those defined in a commonly used dictionary should be interpreted as having a meaning consistent with the meaning in the context of the related art, and should not be interpreted in an ideal or excessively formal manner unless explicitly defined in the present application.

Throughout the specification when a part includes a certain element, it means that other elements may be further included, rather than excluding other elements, unless otherwise stated.

Hereinafter, preferred embodiments according to the present invention will be described in detail with reference to the accompanying drawings.

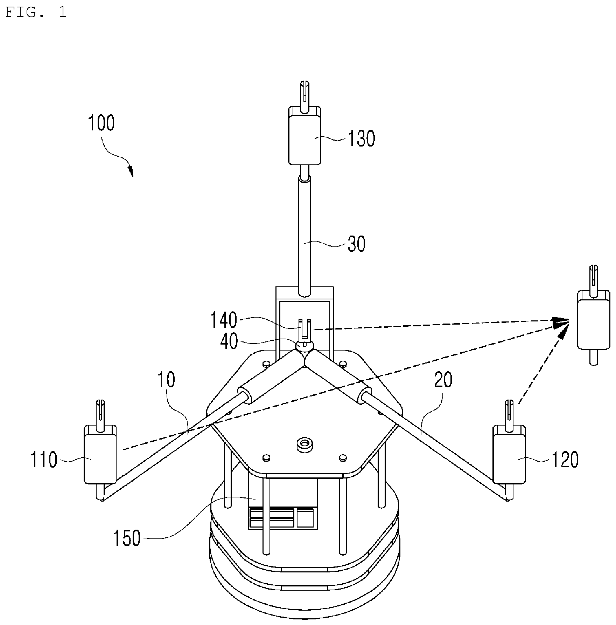

FIG. 1 illustrates a mobile positioning device according to an embodiment of the present invention.

Referring to FIG. 1, the mobile positioning device according to the embodiment of the present invention may include a first axis column 10, a second axis column 20, a third axis column 30, and a first axis positioning terminal 110, a second axis positioning terminal 120, a third axis positioning terminal 130, an origin positioning terminal 140, a control board 150, and a driving unit.

The first axis column 10, the second axis column 20, and the third axis column 30 are axes included in three dimensions, and the respective axis columns mutually form 90 degrees and may correspond to an X-axis, a Y-axis, and a Z-axis, respectively.

When a location at which the first axis column 10, the second axis column 20, and the third axis column 30 are in contact with each other is set as the origin, the origin positioning terminal 140 may be disposed at the origin.

The first axis positioning terminal 110 according to an embodiment of the present invention may be disposed on the first axis column 10 at a preset distance d from the origin, the second axis positioning terminal 120 may be disposed on the second axis column 20 at the preset distance d from the origin, and the third axis positioning terminal 130 may be disposed on the third axis column 30 at the preset distance d from the origin.

The control board 150 according to an embodiment of the present invention may calculate and measure the location of the target node using a first distance between the target node and a node of the first axis positioning terminal 110, a second distance between the target node and a node of the second axis positioning terminal 120, a third distance between the target node and a node of the third axis positioning terminal 130, and an origin distance between the target node and a node of the origin positioning terminal 140. Meanwhile, the control board 150 may be implemented as an embedded board.

Meanwhile, the driving unit according to an embodiment of the present invention may move the mobile positioning device, and may be implemented as a motor and a wheel, etc., and the mobile positioning device may be a mobile robot, etc. However, the mobile positioning device is not limited thereto and may be used in a variety of applications.

In addition, the target node may be a location of a movable object such as a drone, and is not limited thereto, and various targets may be included.

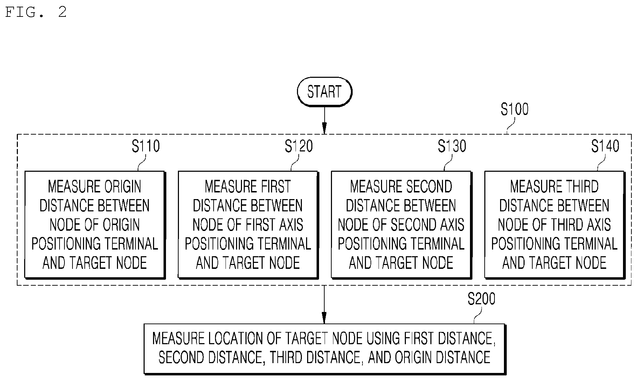

FIG. 2 is a flowchart of a location measurement method in a wireless network implemented on a mobile platform according to an embodiment of the present invention.

Referring to FIG. 2, the location measurement method according to the embodiment of the present invention may include a step S100 of measuring a distance between the target node and each of the positioning terminals 110, 120, 130, and 140, and a step S200 of calculating and measuring a location of the target node using the measured first distance, second distance, third distance, and origin distance.

The step S100 of measuring the distance between the target node and each of the positioning terminals 110, 120, 130, and 140 according to an embodiment of the present invention may include a step S110 of measuring, by the origin positioning terminal disposed at the origin, the origin distance between the node of the origin positioning terminal and the target node, a step S120 of measuring, by the first axis positioning terminal, the first distance between the node of the first axis positioning terminal and the target node, a step S130 of measuring, by the second axis positioning terminal, the second distance between the node of the second axis positioning terminal and the target node, and a step S140 of measuring, by the third axis positioning terminal, the third distance between the node of the third axis positioning terminal and the target node. The steps S110, S120, S130, and S140 of measuring the respective distances may be characterized by being simultaneously performed.

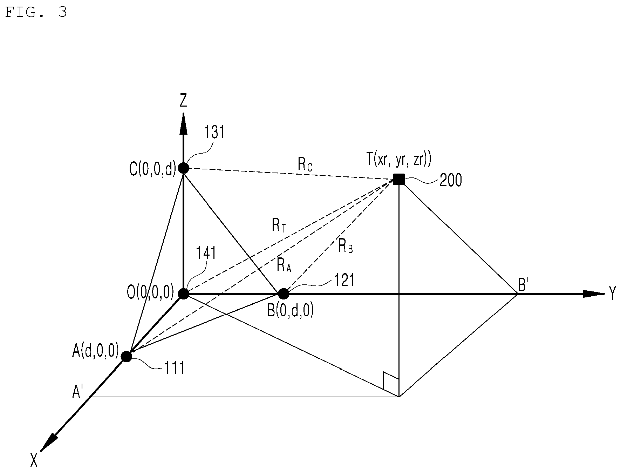

FIG. 3 illustrates a method of computing the location of the target node using a distance according to an embodiment of the present invention.

The method of computing the location of the target node using measured distance information will be described with reference to FIG. 3.

The first axis positioning terminal 110 is disposed at a node A, the second axis positioning terminal 120 is disposed at a node B, the third axis positioning terminal 130 is disposed at a node C, and the origin positioning terminal 140 is disposed at an origin node O. The first, second, and third axis positioning terminals 111, 121, and 131 may be disposed apart from the origin node O by the preset distance d. However, here, d may be different for each mobile positioning device.

According to an embodiment of the present invention, in order to compute the location information $(x_T, y_T, z_T)$ of the target node T, measured distance information ($R_A$, $R_B$, $R_C$, $R_T$) is used.

Here, the first distance between the target node and the node A of the first axis positioning terminal is denoted by $R_A$, the second distance between the target node and the node B of the second axis positioning terminal is denoted by $R_B$, the third distance between the target node and the node C of the third axis positioning terminal is denoted by $R_C$, and the origin distance between the target node and the node O of the origin positioning terminal is denoted by $R_T$.

Hereinafter, a description will be given of a method of computing the location information (xT, yT, zT) of the target node T.

Referring to FIG. 3, an equation of a sphere satisfying Equation 4 below may be derived.

[Equation 4]

$$R_A^2 = (x_T - d)^2 + y_T^2 + z_T^2$$
$$R_B^2 = x_T^2 + (y_T - d)^2 + z_T^2$$
$$R_C^2 = x_T^2 + y_T^2 + (z_T - d)^2$$

In addition, $R_T$, which is the distance from the origin node O to the target node T, satisfies an equation of a sphere satisfying the following Equation 5.

[Equation 5]

$$R_T^2 = x_T^2 + y_T^2 + z_T^2.$$

When Equation 4 and Equation 5 are combined and solved, a calculation formula for computing the location information of the target node T may be derived as shown in the following Equation.

[Equation 6]

$$x_T = \frac{R_T^2 - R_A^2 + d^2}{2d},$$
$$y_T = \frac{R_T^2 - R_B^2 + d^2}{2d},$$
$$z_T = \frac{R_T^2 - R_C^2 + d^2}{2d}.$$

In order to use the location calculation formula (Equation 6) derived as described above, distance values RA, RB, RC, and RT from the reference nodes A, B, C, and O to the target node T need to be measured. For the distances RA, RB, RC, and RT, it is possible to apply technology used in a conventional location measurement method.

For example, by transmitting radio waves from the positioning terminals 111, 121, 131, and 141 disposed at the respective reference nodes to the target node by wireless communication to measure radio waves reflected and received by the target node, the distances RA, RB, RC, and RT may be measured using a time interval between a radio wave transmission time and a radio wave reception time.

Meanwhile, a wireless communication method used by the positioning terminals 111, 121, 131, and 141 complies with the IEEE802.15.4a standard to which an SDS-TWR 8 (Symmetry double side-Two way ranging) algorithm is applied. Commercially available chipsets are available from Nanotron and Decawave, and may measure distance information with accuracy of 1 m and 10 cm, respectively.

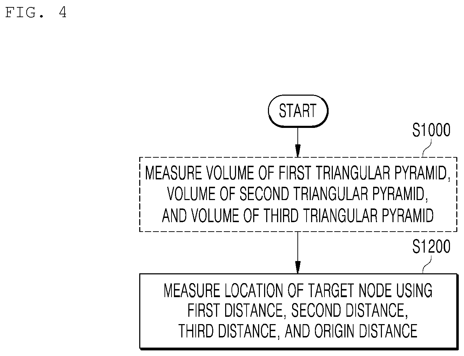

FIG. 4 is a flowchart of a location measurement method in a wireless network implemented on a mobile platform according to another embodiment of the present invention.

According to the present invention, a linear location calculation formula may be derived using volumes of a plurality of triangular pyramids having the respective reference nodes A, B, C, and O and the target node T as vertices.

When the linear location calculation formula derived according to another embodiment of the present invention is applied to a linear Kalman filter algorithm, etc., it is possible to not only improve the location accuracy but also to expand the network.

The location measurement method according to another embodiment of the present invention may compute the location of the target node by using the volume of the first triangular pyramid, the volume of the second triangular pyramid, and the volume of the third triangular pyramid (S1200).

The location measurement method according to another embodiment of the present invention may measure the volume of the first triangular pyramid, the volume of the second triangular pyramid, and the volume of the third triangular pyramid before computing the location of the target node using the volumes of the plurality of triangular pyramids (S1000), which may be omitted.

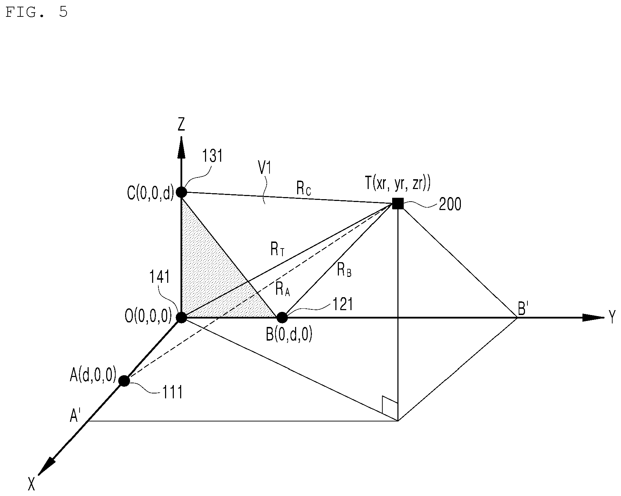

FIGs. 5 to 7 illustrate a method of computing the location of the target node using volume information according to another embodiment of the present invention.

Referring to FIG. 5, it is possible to construct a regular tetrahedron having a triangle OBC, which has the node B 121, the node C 131, and the node O 141 as vertices, as a base and having $R_T$, $R_B$, and $R_C$ as hypotenuses. When the volume of the regular tetrahedron is defined as $V_1$, a height of the regular tetrahedron $V_1$ becomes $x_T$.

The volume of the regular tetrahedron having the triangle OBC as a base may be defined as the following Equation 7.

[Equation 7]

$$V_1 = \frac{1}{3}(\text{area of triangle } \triangle OBC) \cdot (\text{height}) = \frac{1}{3} \cdot \frac{d^2}{2} \cdot x_T = \frac{d^2}{6} x_T,$$

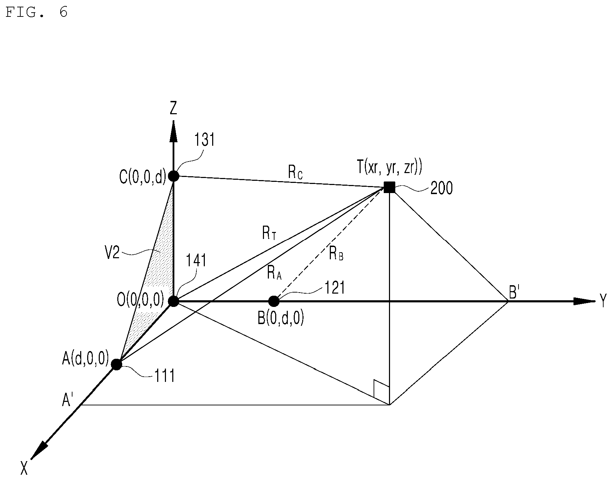

Similarly, referring to FIG. 6, it is possible to construct a regular tetrahedron having a triangle OAC, which has the node A 111, the node C 131, and the node O 141 as vertices, as a base and having $R_T$, $R_A$, and $R_C$ as hypotenuses. When the volume of the regular tetrahedron is defined as $V_2$, a height of the regular tetrahedron $V_2$ becomes $y_T$.

The volume of the regular tetrahedron having the triangle OAC as a base may be defined as the following Equation 8.

[Equation 8]

$$V_2 = \frac{1}{3}(\text{area}_{of} \triangle OAC) \cdot (\text{height}) = \frac{1}{3} \cdot \frac{d^2}{2} \cdot y_T = \frac{d^2}{6} y_T$$

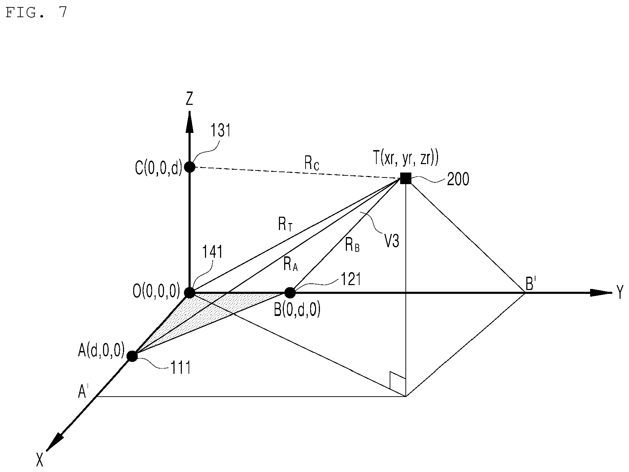

In addition, referring to FIG. 7, it is possible to construct a regular tetrahedron having a triangle OAB, which has the node A 111, the node B 121, and the node O 141 as vertices, as a base and having $R_T$, $R_A$, and $R_B$ as hypotenuses. When the volume of the regular tetrahedron is defined as $V_3$, a height of the regular tetrahedron $V_3$ becomes $z_T$.

The volume of the regular tetrahedron having the triangle OAB as a base may be defined as in the following Equation 9.

[Equation 9]

$$V_3 = \frac{1}{3}(\text{area}_{of} \triangle OAB) \cdot (\text{height}) = \frac{1}{3} \cdot \frac{d^2}{2} \cdot z_T = \frac{d^2}{6} z_T$$

Accordingly, using Equation 7, Equation 8, and Equation 9, the location information ($x_T$, $y_T$, $z_T$) of the target node T may be computed as the defined volumes as in the following Equation 10.

[Equation 10]

$$x_T = \frac{6}{d^2} \cdot V_1. \quad y_T = \frac{6}{d^2} \cdot V_2. \quad z_T = \frac{6}{d^2} \cdot V_3$$

Finally, when the position T of the target node is derived as a linear calculation formula using vectors, the position T may be obtained as shown in the following Equation 11 and Equation 12.

[Equation 11]

$$T = MV,$$

[Equation 12]

$$M = \frac{6}{d^2}\begin{pmatrix}1 & 0 & 0\\ 0 & 1 & 0\\ 0 & 0 & 1\end{pmatrix}, \quad T = \begin{pmatrix}x_T\\ y_T\\ z_T\end{pmatrix}, \quad V = \begin{pmatrix}V_1\\ V_2\\ V_3\end{pmatrix}.$$

When the linear location calculation formula defined as Equation 11 and Equation 12 is used for the location measurement method in the wireless network, there is an advantage in that location accuracy can be improved by applying the linear Kalman filter algorithm.

The above description is merely illustrative of the essential characteristics of the present invention. Therefore, the embodiments disclosed in the present invention are not intended to limit the present invention The protection scope of the present invention should be interpreted by the following claims.

100: mobile positioning device
10: first axis column
20: second axis column
30: third axis column
40: origin
110: first axis positioning terminal
120: second axis positioning terminal
130: third axis positioning terminal
140: origin positioning terminal
150: control board

**Claims**

1. A mobile positioning device (100), the mobile positioning device (100) including a first axis column (10), a second axis column (20), and a third axis column (30), the first axis column (10), the second axis column (20), and the third axis column (30) being axes included in three dimensions, the respective axis columns mutually forming 90 degrees, and a location at which the first axis column (10), the second axis column (20), and the third axis (30) column are in contact with each other being set as an origin, the mobile positioning device (100) comprising:

an origin positioning terminal (140) disposed at the origin;
a first axis positioning terminal (110) disposed on the first axis column (10) and at a preset distance (d) from the origin;
a second axis positioning terminal (120) disposed on the second axis column (20) and at the preset distance (d) from the origin;
a third axis positioning terminal (130) disposed on the third axis column (30) and at the preset distance (d) from the origin;
a driving unit; and
a control board (150) configured to measure a location of a target node using a first distance between the target node and a node of the first axis positioning terminal (110), a second distance between the target node and a node of the second axis positioning terminal (120), a third distance between the target node and a node of the third axis positioning terminal (130), and an origin distance between the target node and a node of the origin positioning terminal (140); **characterized in that**
the control board (150) measures the location ($x_T$, $y_T$, $z_T$) of the target node using the following equations:

$$T = MV,$$

$$M = \frac{6}{d^2} \begin{pmatrix} 1\,0\,0 \\ 0\,1\,0 \\ 0\,0\,1 \end{pmatrix}, \quad T = \begin{pmatrix} x_T \\ y_T \\ z_T \end{pmatrix}, \quad V = \begin{pmatrix} V_1 \\ V_2 \\ V_3 \end{pmatrix}.$$

the control board (150) computes the location ($x_T$, $y_T$, $z_T$) of the target node based on the following three volumes:

a volume, $V_1$, of a tetrahedron having, as a base, a triangle having the origin, the node of the second axis positioning terminal (120), and the node of the third axis positioning terminal (130) as vertices, and having a height of $x_T$;

a volume, $V_2$, of a tetrahedron having, as a base, a triangle having the origin, the node of the first axis positioning terminal (110), and the node of the third axis positioning terminal (130) as vertices, and having a height of $y_T$; and

a volume, $V_3$, of a tetrahedron having, as a base, a triangle having the origin, the node of the first axis positioning terminal (110), and the node of the second axis positioning terminal (120) as vertices, and having a height of $z_T$.

2. A location measurement method in a wireless network operating on a mobile platform using a mobile positioning device (100) including a first axis column (10), a second axis column (20), a third axis column (30), a driving unit, and a control board (150), and a location at which the first axis column (10), the second axis column (20), and the third axis column (30) are in contact with each other being set as an origin, the location measurement method comprising:

measuring an origin distance between a node of an origin positioning terminal (140) and a target node by the origin positioning terminal (140) disposed at the origin;

measuring a first distance between a node of a first axis positioning terminal (110) and the target node by the first axis positioning terminal (110) disposed on the first axis column (10) and at a preset distance (d) from the origin;

measuring a second distance between a node of a second axis positioning terminal (120) and the target node by the second axis positioning terminal (120) disposed on the second axis column (20) and at the preset distance (d) from the origin;

measuring a third distance between a node of a third axis positioning terminal (130) and the target node by the third axis positioning terminal (130) disposed on the third axis column (30) and at the preset distance (d) from the origin; and

measuring, by the control board (150), a location of the target node using the first distance, the second distance, the third distance, and the origin distance,

**characterized in that**

the measuring of the location of the target node includes measuring the location ($x_T$, $y_T$, $z_T$) of the target node using the following equations:

$$T = MV,$$

$$M = \frac{6}{d^2} \begin{pmatrix} 1\,0\,0 \\ 0\,1\,0 \\ 0\,0\,1 \end{pmatrix}, \quad T = \begin{pmatrix} x_T \\ y_T \\ z_T \end{pmatrix}, \quad V = \begin{pmatrix} V_1 \\ V_2 \\ V_3 \end{pmatrix}.$$

where $V_1$ denotes a volume of a tetrahedron having, as a base, a triangle having the origin, the node of the second axis positioning terminal (120), and the node of the third axis positioning terminal (130) as vertices, and having a height of $x_T$, V2 denotes a volume of a tetrahedron having, as a base, a triangle having the origin, the node of the first axis positioning terminal (110), and the node of the third axis positioning terminal (130) as vertices, and having a height of $y_T$, and $V_3$ denotes a volume of a tetrahedron having, as a base, a triangle having the origin, the node of the first axis positioning terminal (110), and the node of the second axis positioning terminal (120) as vertices, and having a height of $z_T$.

3. The location measurement method according to claim 2, wherein the measuring of the origin distance, the measuring of the first distance, the measuring of the second distance, and the measuring of the third distance are performed at the same time.

4. A computer program for measuring location in a wireless network operating on a mobile platform in a computer program coupled to a computing device and stored in a computer-readable recording medium, the computer program executing steps according to any one of claims 2 to 3.

**Patentansprüche**

1. Mobile Positioniervorrichtung (100), wobei die mobile Positioniervorrichtung (100) Folgendes umfasst: eine erste Achssäule (10), eine zweite Achssäule (20) und eine dritte Achssäule (30), wobei die erste Achssäule (10), die zweite Achssäule (20) und die dritte Achssäule (30) Achsen sind, die in drei Dimensionen enthalten sind, wobei die jeweiligen Achssäulen gegenseitig 90 Grad bilden, und einen Ort, an dem die erste Achssäule (10), die zweite Achssäule (20), und die dritte Achssäule (30) in Kontakt miteinander sind, der als ein Ursprung festgelegt ist, wobei die mobile Positioniervorrichtung (100) Folgendes umfasst:

ein Ursprungspositionierungsendgerät (140), das am Ursprung angeordnet ist;
ein erstes Achspositionierungsendgerät (110), das an der ersten Achssäule (10) und in einem voreingestellten Abstand (d) von dem Ursprung angeordnet ist;
ein zweites Achspositionierungsendgerät (120), das an der zweiten Achssäule (20) und in dem voreingestellten Abstand (d) von dem Ursprung angeordnet ist;
ein drittes Achspositionierungsendgerät (130), das an der dritten Achssäule (30) und in dem voreingestellten Abstand (d) von dem Ursprung angeordnet ist;
eine Antriebseinheit; und
eine Steuerplatine (150), die dazu ausgelegt ist, einen Ort eines Zielknotens unter Verwendung eines ersten Abstands zwischen dem Zielknoten und einem Knoten des ersten Achspositionierungsendgeräts (110), eines zweiten Abstands zwischen dem Zielknoten und einem Knoten des zweiten Achspositionierungsendgeräts (120), eines dritten Abstands zwischen dem Zielknoten und einem Knoten des dritten Achspositionierungsendgeräts (130) und einen Ursprungsabstand zwischen dem Zielknoten und einem Knoten des Ursprungspositionierungsendgeräts (140) zu messen;
**dadurch gekennzeichnet, dass**
die Steuerplatine (150) den Ort $(x_T, y_T, z_T)$ des Zielknotens unter Verwendung der folgenden Gleichungen misst:

$$T = MV.$$

$$M = \frac{6}{d^2} \begin{pmatrix} 1 & 0 & 0 \\ 0 & 1 & 0 \\ 0 & 0 & 1 \end{pmatrix}, \quad T = \begin{pmatrix} x_T \\ y_T \\ z_T \end{pmatrix}, \quad V = \begin{pmatrix} V_1 \\ V_2 \\ V_3 \end{pmatrix}.$$

die Steuerplatine (150) den Ort $(x_T, y_T, z_T)$ des Zielknotens basierend auf den folgenden drei Volumina berechnet:

ein Volumen, $V_1$, eines Tetraeders, das als eine Basis ein Dreieck mit dem Ursprung, dem Knoten des zweiten Achspositionierungsendgeräts (120) und dem Knoten des dritten Achspositionierungsendgeräts (130) als Scheitelpunkte aufweist und eine Höhe von $x_T$ aufweist;
ein Volumen, $V_2$, eines Tetraeders, das als eine Basis ein Dreieck mit dem Ursprung, dem Knoten des ersten Achspositionierungsendgeräts (110) und dem Knoten des dritten Achspositionierungsendgeräts (130) als Scheitelpunkte aufweist und eine Höhe von $y_T$ aufweist; und
ein Volumen, $V_3$, eines Tetraeders, das als eine Basis ein Dreieck mit dem Ursprung, dem Knoten des ersten Achspositionierungsendgeräts (110) und dem Knoten des zweiten Achspositionierungsendgeräts (120) als Scheitelpunkte aufweist und eine Höhe von $z_T$ aufweist.

2. Ortsmessverfahren in einem drahtlosen Netzwerk, das auf einer mobilen Plattform unter Verwendung einer mobilen Positioniervorrichtung (100) arbeitet, die eine erste Achssäule (10), eine zweite Achssäule (20), eine dritte Achssäule (30) eine Antriebseinheit und eine Steuerplatine (150) umfasst, und wobei ein Ort, an dem die erste Achssäule (10), die zweite Achssäule (20) und die dritte Achssäule (30) in Kontakt miteinander sind, als ein Ursprung festgelegt wird, wobei das Ortsmessverfahren Folgendes umfasst:

Messen eines Ursprungsabstands zwischen einem Knoten eines Ursprungspositionierungsendgeräts (140) und einem Zielknoten durch das Ursprungspositionierungsendgerät (140), das an dem Ursprung angeordnet ist;
Messen eines ersten Abstands zwischen einem Knoten eines ersten Achspositionierungsendgeräts (110) und dem Zielknoten durch das erste Achspositionierungsendgerät (110), das auf der ersten Achssäule (10) und in einem voreingestellten Abstand (d) von dem Ursprung angeordnet ist;

Messen eines zweiten Abstands zwischen einem Knoten eines zweiten Achspositionierungsendgeräts (120) und dem Zielknoten durch das zweite Achspositionierungsendgerät (120), das an der zweiten Achssäule (20) und in dem voreingestellten Abstand (d) von dem Ursprung angeordnet ist;

Messen eines dritten Abstands zwischen einem Knoten eines dritten Achspositionierungsendgeräts (130) und dem Zielknoten durch das dritte Achspositionierungsendgerät (130), das an der dritten Achssäule (30) und in dem voreingestellten Abstand (d) von dem Ursprung angeordnet ist; und

Messen, durch die Steuerplatine (150), einer Position des Zielknotens unter Verwendung des ersten Abstands, des zweiten Abstands, des dritten Abstands und des Ursprungsabstands, **dadurch gekennzeichnet, dass** das Messen des Ortes des Zielknotens das Messen des Ortes $(x_T, y_T, z_T)$ des Zielknotens unter Verwendung der folgenden Gleichungen umfasst:

$$T = MV,$$

$$M = \frac{6}{d^2}\begin{pmatrix} 1 & 0 & 0 \\ 0 & 1 & 0 \\ 0 & 0 & 1 \end{pmatrix}, \quad T = \begin{pmatrix} x_T \\ y_T \\ z_T \end{pmatrix}, \quad V = \begin{pmatrix} V_1 \\ V_2 \\ V_3 \end{pmatrix}.$$

wobei $V_1$ ein Volumen eines Tetraeders bezeichnet, das als eine Basis ein Dreieck mit dem Ursprung, dem Knoten des zweiten Achsenpositionierungsndgeräts (120) und dem Knoten des dritten Achsenpositionierungsendgeräts (130) als Scheitelpunkte aufweist und eine Höhe von $x_T$ aufweist, wobei V2 ein Volumen eines Tetraeders bezeichnet, das als eine Basis ein Dreieck mit dem Ursprung, dem Knoten des ersten Achsenpositionierungsendgeräts (110) und dem Knoten des dritten Achsenpositionierungsendgeräts (130) als Scheitelpunkte aufweist und eine Höhe von $y_T$ aufweist, und wobei $V_3$ ein Volumen eines Tetraeders bezeichnet, das als eine Basis ein Dreieck mit dem Ursprung, dem Knoten des ersten Achsenpositionierungsendgeräts (110) und dem Knoten des zweiten Achsenpositionierungsendgeräts (120) als Scheitelpunkte aufweist und eine Höhe von $z_T$ aufweist.

3. Ortsmessverfahren nach Anspruch **2,** wobei das Messen des Ursprungsabstands, das Messen des ersten Abstands, das Messen des zweiten Abstands und das Messen des dritten Abstands gleichzeitig durchgeführt werden.

4. Computerprogramm zum Messen eines Ortes in einem drahtlosen Netzwerk, das auf einer mobilen Plattform in einem Computerprogramm arbeitet, das mit einer Rechenvorrichtung gekoppelt und in einem computerlesbaren Aufzeichnungsmedium gespeichert ist, wobei das Computerprogramm Schritte nach einem der Ansprüche 2 bis 3 ausführt.

**Revendications**

1. Dispositif de positionnement mobile (100), le dispositif de positionnement mobile (100) incluant une première colonne d'axe (10), une seconde colonne d'axe (20), et une troisième colonne d'axe (30), la première colonne d'axe (10), la seconde colonne d'axe (20) et la troisième colonne d'axe (30) étant des axes inclus dans trois dimensions, les colonnes d'axe respectives formant mutuellement 90 degrés, et un emplacement auquel la première colonne d'axe (10), la seconde colonne d'axe (20) et la troisième colonne d'axe (30) sont en contact les unes avec les autres étant défini comme origine, le dispositif de positionnement mobile (100) comprenant :

un terminal de positionnement d'origine (140) disposé au niveau de l'origine ;
un premier terminal de positionnement d'axe (110) disposé sur la première colonne d'axe (10) et à une distance prédéfinie (d) de l'origine ;
un second terminal de positionnement d'axe (120) disposé sur la seconde colonne d'axe (20) et à la distance prédéfinie (d) de l'origine ;
un troisième terminal de positionnement d'axe (130) disposé sur la troisième colonne d'axe (30) et à une distance prédéfinie (d) de l'origine ;
une unité d'entraînement ; et
une carte de commande (150) configurée pour mesurer un emplacement d'un nœud cible à l'aide d'une première distance entre le nœud cible et un nœud du premier terminal de positionnement d'axe (110), d'une seconde distance entre le nœud cible et un nœud du second terminal de positionnement d'axe (120), d'une troisième distance entre le nœud cible et un nœud du troisième terminal de positionnement d'axe (130), et d'une distance d'origine entre le nœud cible et un nœud du terminal de positionnement d'origine (140) ; **caractérisé en ce que** la carte de commande (150) mesure l'emplacement ($x_T$, $y_T$, $z_T$) du nœud cible à l'aide des équations suivantes :

$$T = MV.$$

$$M = \frac{6}{d^2} \begin{pmatrix} 1 & 0 & 0 \\ 0 & 1 & 0 \\ 0 & 0 & 1 \end{pmatrix}, \quad T = \begin{pmatrix} x_T \\ y_T \\ z_T \end{pmatrix}, \quad V = \begin{pmatrix} V_1 \\ V_2 \\ V_3 \end{pmatrix}.$$

la carte de commande (150) calcule l'emplacement ($x_T$, $y_T$, $z_T$) du nœud cible sur la base des trois volumes suivants :

un volume, $V_1$, d'un tétraèdre ayant, comme base, un triangle ayant l'origine, le nœud du second terminal de positionnement d'axe (120), et le nœud du troisième terminal de positionnement d'axe (130) comme sommets, et ayant une hauteur de $x_T$ ;
un volume, $V_2$, d'un tétraèdre ayant, comme base, un triangle ayant l'origine, le nœud du premier terminal de positionnement d'axe (110), et le nœud du troisième terminal de positionnement d'axe (130) comme sommets, et ayant une hauteur de $y_T$ ; et
un volume, $V_3$, d'un tétraèdre ayant, comme base, un triangle ayant l'origine, le nœud du premier terminal de positionnement d'axe (110), et le nœud du second terminal de positionnement d'axe (120) comme sommets, et ayant une hauteur de $z_T$.

2. Procédé de mesure d'emplacement dans un réseau sans fil fonctionnant sur une plateforme mobile à l'aide d'un dispositif de positionnement mobile (100) incluant une première colonne d'axe (10), une seconde colonne d'axe (20), une troisième colonne d'axe (30), une unité d'entraînement, et une carte de commande (150), et un emplacement auquel la première colonne d'axe (10), la seconde colonne d'axe (20) et la troisième colonne d'axe (30) sont en contact les unes avec les autres étant défini comme origine, le procédé de mesure d'emplacement comprenant :

la mesure d'une distance d'origine entre un nœud d'un terminal de positionnement d'origine (140) et un nœud cible par le terminal de positionnement d'origine (140) disposé au niveau de l'origine ;
la mesure d'une première distance entre un nœud d'un premier terminal de positionnement d'axe (110) et le nœud cible par le premier terminal de positionnement d'axe (110) disposé sur la première colonne d'axe (10) et à une distance prédéfinie (d) de l'origine ;
la mesure d'une seconde distance entre un nœud d'un second terminal de positionnement d'axe (120) et le nœud cible par le second terminal de positionnement d'axe (120) disposé sur la seconde colonne d'axe (20) et à la distance prédéfinie (d) de l'origine ;
la mesure d'une troisième distance entre un nœud d'un troisième terminal de positionnement d'axe (130) et le nœud cible par le troisième terminal de positionnement d'axe (130) disposé sur la troisième colonne d'axe (30) et à la distance prédéfinie (d) de l'origine ; et
la mesure, par la carte de commande (150), d'un emplacement du nœud cible à l'aide de la première distance, de la seconde distance, de la troisième distance, et de la distance d'origine, **caractérisé en ce que**
la mesure de l'emplacement du nœud cible inclut la mesure de l'emplacement ($x_T$, $y_T$, $z_T$) du nœud cible à l'aide des équations suivantes :

$$T = MV.$$

$$M = \frac{6}{d^2} \begin{pmatrix} 1 & 0 & 0 \\ 0 & 1 & 0 \\ 0 & 0 & 1 \end{pmatrix}, \quad T = \begin{pmatrix} x_T \\ y_T \\ z_T \end{pmatrix}, \quad V = \begin{pmatrix} V_1 \\ V_2 \\ V_3 \end{pmatrix}.$$

où $V_1$ désigne un volume d'un tétraèdre ayant, comme base, un triangle ayant l'origine, le nœud du second terminal de positionnement d'axe (120) et le nœud du troisième terminal de positionnement d'axe (130) comme sommets, et ayant une hauteur de $x_T$, $V_2$ désigne un volume d'un tétraèdre ayant, comme base, un triangle ayant l'origine, le nœud du premier terminal de positionnement d'axe (110) et le nœud du troisième terminal de positionnement d'axe (130) comme sommets, et ayant une hauteur de $y_T$, et $V_3$ désigne un volume d'un tétraèdre ayant, comme base, un triangle ayant l'origine, le nœud du premier terminal de positionnement d'axe (110) et le nœud du second terminal de positionnement d'axe (120) comme sommets, et ayant une hauteur de $z_T$.

3. Procédé de mesure d'emplacement selon la revendication 2, dans lequel la mesure de la distance d'origine, la mesure de la première distance, la mesure de la seconde distance et la mesure de la troisième distance sont réalisées en même temps.

4. Programme informatique pour mesurer un emplacement dans un réseau sans fil fonctionnant sur une plateforme mobile dans un programme informatique couplé à un dispositif informatique et stocké dans un support d'enregistrement lisible par ordinateur, le programme informatique exécutant des étapes selon l'une quelconque des revendications 2 à 3.

FIG. 1

FIG. 2

```
                              ┌─────────┐
                              │  START  │
                              └─────────┘                    S100
                                   │                          ╱
   ┌───────────────────────────────┼──────────────────────────────────────────┐
   │     S110              S120     ▼          S130                 S140        │
   │      ╱                 ╱                   ╱                    ╱          │
   │ ┌──────────────┐ ┌──────────────┐  ┌──────────────┐  ┌──────────────┐     │
   │ │ MEASURE ORIGIN│ │ MEASURE FIRST│  │MEASURE SECOND│  │ MEASURE THIRD│     │
   │ │DISTANCE BETWEEN│ │DISTANCE BETWEEN│ │DISTANCE BETWEEN│ │DISTANCE BETWEEN│  │
   │ │NODE OF ORIGIN │ │NODE OF FIRST AXIS│ │NODE OF SECOND AXIS│ │NODE OF THIRD AXIS│ │
   │ │POSITIONING TERMINAL│ │POSITIONING TERMINAL│ │POSITIONING TERMINAL│ │POSITIONING TERMINAL│ │
   │ │AND TARGET NODE│ │AND TARGET NODE│  │AND TARGET NODE│  │AND TARGET NODE│   │
   │ └──────────────┘ └──────────────┘  └──────────────┘  └──────────────┘     │
   └───────────────────────────────┼──────────────────────────────────────────┘
                                   │                          S200
                                   ▼                           ╱
   ┌───────────────────────────────────────────────────────────────────┐
   │ MEASURE LOCATION OF TARGET NODE USING FIRST DISTANCE,             │
   │ SECOND DISTANCE, THIRD DISTANCE, AND ORIGIN DISTANCE              │
   └───────────────────────────────────────────────────────────────────┘
```

FIG. 3

FIG. 4

```
                    ┌─────────┐
                    │  START  │
                    └────┬────┘                    S1000
                         │                           ⌇
         ┌───────────────▼─────────────────────────────┐
         ¦ MEASURE VOLUME OF FIRST TRIANGULAR PYRAMID,  ¦
         ¦     VOLUME OF SECOND TRIANGULAR PYRAMID,     ¦
         ¦     AND VOLUME OF THIRD TRIANGULAR PYRAMID   ¦
         └───────────────┬─────────────────────────────┘
                         │                           S1200
                         │                             ⌇
         ┌───────────────▼─────────────────────────────┐
         │     MEASURE LOCATION OF TARGET NODE USING    │
         │         FIRST DISTANCE, SECOND DISTANCE,     │
         │       THIRD DISTANCE, AND ORIGIN DISTANCE    │
         └─────────────────────────────────────────────┘
```

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120049528

- US 20170115376 A